# EUROPEAN PATENT APPLICATION

(11) **EP 1 743 875 A1**
(43) Date of publication of application: **17.01.2007**
(21) Application number: 05721379.5
(22) Date of filing: 24.03.2005
(51) Int. Cl.: C03C 4/08, C03C 3/089, C03C 3/091, C03C 3/093, H01J 61/30

(54) **ILLUMINATING GLASS**

(30) Priority: 05.04.2004 JP 2004110810; 16.03.2005 JP 2005074988
(71) Applicant: NIPPON ELECTRIC GLASS CO., LTD, Otsu-shi, Shiga 520-8639 (JP)
(72) Inventor: HIKATA, Hajime, Otsu-shi, Shiga 520-8639 (JP); IKEBE, Masaru, Otsu-shi, Shiga 520-8639 (JP)
(74) Representative: Tetzner, Michael
(86) International application number: PCT/JP2005/005365
(87) International publication number: WO 2005/097696

(57) **Abstract**

An illuminating glass that is capable of shielding of ultraviolet radiation lying on the large wavelength side, for example, 313 nm, and exhibits high transparency. The illuminating glass is **characterized by** containing, by mass, 50-78% SiO₂, 11-25% B₂O₃, 0-10% Al₂O₃, 3-20% Li₂O + Na₂O + K₂O, 0-10% MgO, 0-10% CaO, 0-20% SrO, 0-20% BaO, 0-15% ZnO, 2.6-9% TiO₂ and 0.001-5% AS₂O₃ + Sb₂O₃.

## Description

### TECHNICAL FIELD

The present invention relates to a lighting glass, particularly to a lighting glass for use as a material of an envelope for small-diameter fluorescent lamps. This type of fluorescent lamps is used as a backlight source or the like for a liquid crystal display element.

### BACKGROUND ART

Since the liquid crystal display element itself does not emit a light, it requires a backlight or other lighting devices. Such lighting devices include direct type lighting devices and edge type lighting devices. In the direct type lighting devices, a fluorescent lamp is located right below a liquid crystal panel. A reflector directs a light toward the panel and a diffuser renders the light into a homogeneous one. In the edge type lighting devices, a fluorescent lamp is located rearwardly laterally of a liquid crystal panel. A light from a reflector is guided to a light guiding plate and then passed through a diffuser toward the liquid crystal panel. The direct type liquid crystal display devices are suitable for use in large liquid crystal display panels such as for TV. The edge type liquid crystal display devices have been widely used in personal computers (PC).

A cold-cathode fluorescent lamp (for example, see Patent Literature 1) is used as a light source. This cold-cathode fluorescent lamp is fabricated using electrodes such as of kovar, tungsten or molybdenum, sealing beads for sealing the electrode, and an envelope made of a borosilicate glass and having an inner face coated with a phosphor.

A principle of illumination of the cold-cathode fluorescent lamp is similar to that of general hot-cathode fluorescent lamps. That is, a discharge between the electrodes excites the mercury or other gas enclosed in the envelope. The excited gas emits an ultraviolet radiation which in turn induces the phosphor coated on an inner wall surface of the envelope to emit a visible light.
Patent Literature 1: Japanese Patent Laying-open No. Hei 6-111784
Patent Literature 2: Japanese Patent Laying-open No. 2002-60245
Patent Literature 3: Japanese Patent Laying-open No. 2002-68775
Patent Literature 4: Japanese Patent Laying-open No. 2002-338296

### DISCLOSURE OF THE INVENTION

A significant difference between the cold-cathode lamp and the hot-cathode lamp for general lighting resides in that a glass envelope of the former lamp is smaller in both diameter and wall thickness and thus structurally lower in mechanical strength. Accordingly, the envelope needs to be higher in mechanical strength. As contrary to the hot-cathode lamp, the cold-cathode lamp does not experience failure of its electrodes but decreases in brightness with time. Thus, a service life of the cold-cathode lamp is indicated by the time during which its luminous flux reduces to a half of an initial value. The luminous flux deterioration is caused to occur due to the deterioration of a fluorescent lamp as a light source, a resin reflector for efficiently reflecting a light from the lamp and a diffuser for diffusing the light. Degradation of these resin materials occurs when an ultraviolet radiation produced inside the lamp leaks to an outside of the tube.

This has led to the use of a borosilicate glass, which is high in mechanical strength, for this type of lamp envelopes. In an attempt to prevent leakage of an ultraviolet radiation to an outside of the tube, constitution of the envelope from an ultraviolet-shielding glass has been studied. For example, Patent Literatures 2 and 3 disclose glass materials for an envelope of a fluorescent lamp, which have imparted thereto ultraviolet-shielding characteristics by using WO₃ or Nb₂O₅ and TiO₂, respectively.

Although the above-described lighting glasses are capable of shielding a strong ultraviolet radiation in the region up to 254 nm that is produced inside the fluorescent lamp, they are insufficient to absorb a weak ultraviolet radiation at 313 nm. Even the 313 nm ultraviolet radiation causes degradation of the resin material. It is however disregarded when such lamps are used for relatively short-life PC's. However, when a prolonged use is premised, such as in a TV application, deterioration of lamp performances due to the degradation of this resin material can not be disregarded.

It is an object of the present invention to provide a lighting glass which is capable of shielding an ultraviolet radiation in a longer wavelength region including 313 nm and which is high in transparency.

The lighting glass of the present invention is characterized in that it contains, by mass,
50 - 78 % SiO₂,
11 - 25 % B₂O₃,
0 - 10 % Al₂O₃,
3 - 20 % Li₂O + Na₂O + K₂O,
0 - 10 % MgO,
0 - 10 % CaO,
0 - 20 % SrO,
0 - 20 % BaO,
0 - 15 % ZnO,
2.6 - 9 % TiO₂ and
0.001 - 5 % AS₂O₃ + Sb₂O₃.

The fluorescent lamp envelope of the present invention is characterized as comprising the above-specified glass.

The lighting glass of the present invention is capable of shielding an ultraviolet radiation at 313 nm. In addition, it is highly transparent. Furthermore, it can prevent glass discoloration induced by a shorter wavelength ultraviolet radiation (hereinafter referred to as "shorter wavelength ultraviolet discoloration"). It accordingly can sustain high transparency for an extended period of time. Therefore, it is suitable for use as a material for an envelope of a fluorescent lamp, particularly suitable as a material for an envelope of a small-diameter fluorescent lamp which is used as a light source of a lighting device for a liquid crystal display element premised on the prolonged use such as in a TV application.

The use of an envelope made from the above-specified glass allows fabrication of a fluorescent glass which is high in luminance and unsusceptible to luminance deterioration.

### BEST MODE FOR CARRYING OUT THE INVENTION

The lighting glass of the present invention is made of a borosilicate glass high in mechanical strength. Due to the inclusion of at least 2.6 %, preferably at least 3.5 % of TiO₂, it can effectively shield an ultraviolet radiation in the region that does not exceed 313 nm. Its capability to shield a 313 nm ultraviolet radiation slightly drops in a region where TiO₂ is contained in the amount of below 3.5 %. On the other hand, ultraviolet absorption can be expected by the phosphor coated on the inside surface of the tube. It is therefore believed that this glass can be used without a practical problem even in the case where its own shielding capability is slightly low.

A lighting glass containing a large amount of TiO₂ and capable of shielding an ultraviolet radiation is also disclosed in Patent Literature 4. However, the glass described in this Literature is a glass which contains a small amount of B₂O₃. This type of glass that has a low B₂O₃ content is unsusceptible to discoloration due to TiO₂ even if increased in amount, and is a composition system which is easy to shield an ultraviolet radiation. In contrast, the glass of the present invention contains a larger amount of B₂O₃. This type of glass that has a high B₂O₃ content is susceptible to discoloration due to TiO₂. Accordingly, shielding of an ultraviolet radiation in the region that does not exceed 313 nm must be achieved effectively while suppressing discoloration.

The lighting glass of the present invention achieves shielding of an ultraviolet radiation in the region that does not exceed 313 nm and prevention of discoloration at the same time by using at least 2.6 %, particularly at least 3.5 % of TiO₂ in combination with a predetermined amount of As₂O₃ and/or Sb₂O₃.

Other than the capability to shield an ultraviolet radiation in the region that does not exceed 313 nm, an envelope of a fluorescent lamp, for use as a light source of a lighting device such as a backlight, further needs to meet the following characteristic requirements.

### (1) High resistance to shorter wavelength ultraviolet discoloration

If an envelope of a backlighting fluorescent lamp experiences glass discoloration upon exposure to a shorter wavelength ultraviolet radiation emitted from an excited mercury gas or the like, luminance reduction or color shift of emission occurs to result in deterioration of a product quality of a liquid crystal display element.

### (2) High glass transparency

A light emitted from a lamp such as in a TV application is reflected on another lamp to increase its optical path length. Accordingly, in the case where a glass is colored, even if slightly, light absorption by the color is repeated. As a result, a liquid crystal display device becomes darker, which is a problem.

### (3) High dimensional accuracy

Poor dimensional accuracy prevents uniform coating of the phosphor and causes uneven luminance. Also in an optical system consisting of a fluorescent lamp, a light guiding plate and a reflector, it prevents them from being assembled accurately to a designed dimension. As a result, this causes reduction or unevenness of luminance of a backlight unit or a front light unit itself.

### (4) Extremely small number of bubbles

If a bubble resides in a glass, it is drawn during processing into an elongated babble. In the case where this bubble resides closer to an inner face of a tube and opens its portion to the inner face of the tube, if the tube is cut along a line that passes through such an elongated bubble, this bubble likely constitutes a pore that communicates the cut face of the tube with the inner face of the tube. This pore can not be closed even during tube glass processing. Accordingly, the outside air leaks slowly through the pore into the fluorescent lamp tube. This results in a phenomenon that electrode inside the tube ceases emitting electron and the fluorescent lamp stop lighting. Also, the recent trend toward smaller diameter tubes requires reduction of a glass wall thickness. This increases a tendency of a bubble, if present, to open toward the inside face of the tube. Therefore, the higher bubble quality level, relative to conventional glasses, is required for the smaller diameter tubes.

### (5) Conformity in thermal expansion coefficient with electrode material

Sealing beads for sealing an electrode (introduced metal) are generally formed of the same glass material as used for an envelope. Accordingly, the envelope needs to have a thermal expansion coefficient conformable to that of an electrode material such as kovar (thermal expansion coefficient 58 x 10⁻⁷/°C), molybdenum (thermal expansion coefficient 52 x 10⁻⁷/°C) or tungsten (thermal expansion coefficient 45 x 10⁻⁷/°C).

As a glass useful for fabrication of an envelope which satisfies various above-prescribed properties, the following glass can be illustrated which contains, by mass percent,
50 - 78 % SiO₂,
11 - 25 % B₂O₃,
0 - 10 % Al₂O₃,
3 - 20 % Li₂O + Na₂O + K₂O,
0 - 10 % MgO,
0 - 10 % CaO,
0 - 20 % SrO,
0 - 20 % BaO,
0 - 15 % ZnO,
2.6 - 9 % TiO₂ and
0.001 - 5 % As₂O₃ + Sb₂O₃.

The reason for the specified range of each component is described below.

SiO₂ is a main component essential to constitution of a skeleton of a glass. The SiO₂ content is at least 50 %, preferably at least 55 %, more preferably at least 58 %. Also, it does not exceed 78 %, preferably 76 %, more preferably 74 %. If the SiO₂ content is within 78 %, it does not require an extended time to melt a silica material. If the SiO₂ content is within 76 %, precipitation of SiO₂ crystals in the glass is made difficult to occur. If the SiO₂ content is within 74 %, reduction of dimensional accuracy due to partial nonuniformity of viscosity can be prevented effectively. On the other hand, if the SiO₂ content is at least 50 %, improved weather resistance can be obtained as a result of a synergistic effect with TiO₂. If the SiO₂ content is at least 55 %, a glass can be obtained which is hard to precipitate crystals and thus stable.

B₂O₃ is a component which must be incorporated in a large amount for the purposes of meltability improvement, viscosity adjustment, weather resistance improvement and expansion coefficient adjustment. Its content is at least 11 %, preferably at least 13 %, but does not exceed 25 %, preferably 22 %. If the B₂O₃ content does not exceed 25 %, evaporation of a glass component from a molten glass is suppressed to result in obtaining a uniform glass. If the B₂O₃ content does not exceed 22 %, evaporation of a glass component during thermal processing in the fabrication of a lamp is also suppressed to facilitate processing. On the other hand, if the B₂O₃ content is at least 11 %, a viscosity is lowered sufficiently. As a result, it becomes easier to obtain a tubular glass with high dimensional accuracy. The B₂O₃ content, if at least 13 %, further eases melting and increases suitability for mass production.

Al₂O₃ is a component which markedly improves resistance of a glass to devitrification. Although Al₂O₃ is an optional component, its content may preferably be at least 1 %. Its content does not exceed 10 %, preferably 6 %. If Al₂O₃ content does not exceed 10 %, melting and processing in industrial production become easier. If the Al₂O₃ content does not exceed 6 %, a viscosity is lowered sufficiently, making it easy to obtain a tubular glass with high dimensional accuracy. Although not an essential component, Al₂O₃ is preferably contained in the amount of at least 1 % to produce a homogeneous glass and increase a processing stability.

Li₂O, Na₂O and K₂O, which are alkali metal oxides (R₂O) promote melting of a glass. The increase in meltability makes it easy to obtain a glass with high dimensional accuracy. They also serve to adjust a thermal expansion coefficient and a viscosity. On the other hand, they tend to reduce a weather resistance of a glass. For example, R₂O is a cause of a foreign material on a glass surface, e.g., reacts with a carbon dioxide gas or moisture in the air to form a product. It is accordingly required that the alkali content be kept within a suitable range.

Li₂O is an optional component and can be contained in the amount of not exceeding 10 %, preferably not exceeding 4 %. If the Li₂O content does not exceed 10 %, the occurrence of crystal formation is reduced. This as a result makes it easy to obtain a glass with high dimensional accuracy. If the Li₂O content does not exceed 4 %, the occurrence of crystal formation is reduced even in the industrial production. As a result, tube drawing processing can be facilitated.

Na₂O is an optional component and can be contained in the amount of not exceeding 10 %, preferably not exceeding 4 %. If the Na₂O content does not exceed 10 %, a practically sufficient level of weather resistance can be insured. Also, tube drawing forming can be facilitated. If the Na₂O content does not exceed 4 %, it becomes easy to conform a thermal expansion coefficient of a glass to that of tungsten or kovar.

K₂O is an optional component and is preferably contained in the amount of at least 1 %, particularly preferably at least 3 %, but not exceeding 15 %, particularly preferably not exceeding 11 %, further preferably not exceeding 9 %. If the K₂O content does not exceed 15 %, it becomes easy to conform a thermal expansion coefficient of a glass to that of tungsten or kovar. If the K₂O content does not exceed 11 %, particularly 9 %, a sufficiently high weather resistance can be maintained.

The total content of these alkali metal oxides is at least 3 %, preferably at least 4 %, but does not exceed 20 %, preferably 16 %. If the total content of these alkali metal oxides does not exceed 20 %, a thermal expansion coefficient does not become excessively high. This eases conformation in thermal expansion coefficient of a glass to a sealed metal such as kovar. If the total content of these alkali metal oxides does not exceed 16 %, a sufficiently high weather resistance can be maintained so that appearance of a foreign matter can be avoided. On the other hand, if the total content of the alkali metal oxides is at least 3 %, glass formation is made possible. Also, a thermal expansion coefficient is prevented from decreasing to an excessively small value. This makes it easy to conform a thermal expansion coefficient of a glass to that of tungsten or the like. If the total content of the alkali metal oxides is at least 4 %, glass formation is facilitated. This as a result makes it easy to obtain a homogeneous glass.

It is desirable to use two or more, preferably three or more alkali metal oxides in combination, for the purpose of improving an electrical resistance by an effect of mixing alkalis. As a tendency, the higher content of K₂O, among the alkali metals, increases an electrical resistance at 150 °C. This is because K⁺ has a larger ionic radius compared to the other alkali ions and shows a lower mobility in a glass. It is also desirable that K₂O, among the alkali metal oxides, is contained in the largest amount.

MgO and CaO are components which assist melting of a glass. Each of MgO and CaO is an optional component and can be contained in the amount of not exceeding 10 %, preferably not exceeding 5 %. Each component, if not exceeding 10 %, reduces the tendency of crystal precipitation and, if not exceeding 5 %, desirably provides a glass with high dimensional accuracy.

SrO and Ba0 are components which lower a melting point and also restrain segregation (so-called phase separation) of a glass to stabilize it. Each of SrO and BaO is an optional component and can be contained in the amount of not exceeding 20 %, preferably not exceeding 8 %. Each component, if not exceeding 20 %, reduces the tendency of precipitation of crystals consisting mainly of SrO or BaO and, if not exceeding 8 %, desirably provides a glass with high dimensional accuracy.

ZnO is a component which assists melting of a glass. It also prevents phase separation to thereby improve stability of the glass so that the glass maintains its transparency. ZnO is an optional component and can be contained in the amount of not exceeding 15 %, particularly preferably not exceeding 3 %. In order that such an effect is obtained, it is desirable that ZnO is contained in the amount of at least 0.001 %. However, if ZnO is contained in an excessive amount, the occurrence of phase separation is increased to lower a dimensional accuracy. If ZnO is contained in the amount of not exceeding 15 %, phase separation is restrained to stabilize viscosity properties. As a result, a glass with high dimensional accuracy is desirably obtained.

TiO₂ is known to show absorption in the ultraviolet region. TiO₂ is a component which not only imparts a shielding effect to a glass by absorbing an ultraviolet radiation, but provides a resistance to shorter wavelength UV discoloration. TiO₂ also has an effect that improves a weather resistance and enhance an elastic modulus of a glass to increase strength. Its content is at least 2.6 %, preferably at least 3 %, more preferably at least 3.5 %, particularly preferably at least 3.8 %, but does not exceed 9 %, preferably 6 %. If the TiO₂ content is at least 2.6 %, an ultraviolet shielding capability is brought to a level that does not cause a problem in practice. If the TiO₂ content is at least 3 %, particularly at least 3.8 %, even a thin-wall tubular glass can obtain a sufficient ultraviolet shielding capability. On the other hand, the TiO₂ content, if not exceeding 9 %, permits production without formation of crystals. If the TiO₂ content does not exceed 6 %, crystal precipitation is further restrained so that the suitability of mass production increases. In order to avoid transmission attenuation that results, for example, from whitening due to phase separation, the TiO₂ content of not exceeding 4.3 % is recommended.

TiO₂, if coexistent with SiO₂, also has an effect that improves weather resistance and elastic modulus of a glass. The ratio in content by mole of TiO₂ to SiO₂, TiO₂/SiO₂, is at least 0.03, particularly at least 0.04, but does not exceed 0.08, particularly 0.066, further preferably 0.054, further preferably 0.05. If the ratio is at least 0.03, weather resistance of a glass can be improved effectively. If the ratio is at least 0.04, the weather resistance improving effect becomes remarkable. If TiO₂/SiO₂ is less than 0.08, the occurrence of crystal precipitation in a glass is reduced to ease production. If TiO₂/SiO₂ is less than 0.054, the occurrence of phase separation is further reduced to obtain a stable glass. For mass production, it is desirable that the ratio does not exceed 0.05.

If a mixing ratio of TiO₂ and B₂O₃ exceeds a certain value, phase separation is possibly caused to occur. Therefore, the ratio in content by mole of TiO₂ to B₂O₃, TiO₂/B₂O₃, is preferably maintained within 0.27, particularly preferably within 0.24. If TiO₂/B₂O₃ does not exceed 0.27, an opacity increase that results from phase separation is suppressed. If TiO₂/B₂O₃ does not exceed 0.24, a glass stability suitable for mass production is obtained.

A large portion of TiO₂ exists in the tetravalent form (Ti⁴⁺) that shows no absorption in the visible region (does not color a glass). However, a very small portion of TiO₂ exists in the trivalent form (Ti³⁺) that shows slight absorption in the visible region and slightly colors a glass. Ti⁴⁺ and Ti³⁺ keep an equilibrium balance in a glass. However, if an amount of TiO₂ is increased in a glass system containing a large amount of B₂O₃, a concentration of a trivalent form (Ti³⁺) increases to result in a higher tendency of appearance of a color. In the present invention, it is thus required to reduce Ti³⁺ (i.e., increase Ti⁴⁺) .

For the above purpose, As₂O₃ and/or Sb₂O₃ are contained in the total amount of at least 0.001 %, preferably at least 0.01 %, more preferably at least 0.1 %. However, the total amount of As₂O₃ and Sb₂O₃ does not exceed 5 %, preferably 3 %. If the total amount of these components is at least 0.001 %, the equilibrium balance of TiO₂ is allowed to shift to a condition where the trivalent form exists less. If at least 0.01 %, the above effect can be obtained easily. If at least 0.1 %, this effect becomes more significant. These components also serve as a refining agent. On the other hand, these components if contained in a large amount provide a glass with a color. However, if their total amount does not exceed 5 %, they are made usable such as by adjusting melting conditions. If their total amount does not exceed 3 %, they are less influenced by melting conditions, which is desirable.

Since As₂O₃ is a substance burdening environment, it is preferably excluded. If at least 0.0001 %, preferably 0.001 %, it can be contained to obtain the above effect. An upper limit of the As₂O₃ content is preferably 1 %, particularly preferably 0.1 %, further preferably 0.05 %. When an environment issue is taken into consideration, it is desirable that the AS₂O₃ content is below 0.01 %. If the AS₂O₃ content is excessively high, a reduction tendency may occur under some glass melting conditions. As described above, from an environmental point of view, the lower content is better.

Characteristically, Sb₂O₃ shows a weaker effect but less burdens environment compared to As₂O₃. It is desirable that the Sb₂O₃ content does not exceed 5 %, particularly 3 %. The higher Sb₂O₃ content in a glass increases the occurrence of blackening due to reduction during lamp processing. The occurrence of blackening is however reduced if the Sb₂O₃ content does not exceed 5 %. If the Sb₂O₃ content does not exceed 3 %, more stable processing is made possible. Although Sb₂O₃ starts to exhibit the effect at the content of at least 0.0001 %, its content is preferably increased to at least 0.01 %. At this content, it never fails to exhibit the effect even in mass production.

Besides the above-described components, the lighting glass of the present invention may further contain various components, examples of which include Nb₂O₅, WO₃, ZrO₂, Ta₂O₅, SnO₂, CeO₂, SO₃, Fe₂O₃ and Cl₂.

Nb₂O₅ is a component which promotes a longer wavelength ultraviolet shielding effect of TiO₂. It also serves to prevent shorter wavelength ultraviolet discoloration of a glass. Nb₂O₅ is an optional component. Its content is preferably does not exceed 10 %, particularly 7 %. In order to obtain the above effect, it is desirably contained in the amount of at least 0.005 %. On the other hand, Nb₂O₅ tends to promote phase separation and affect a luminance and a color tone of a lamp. Accordingly, its use in a large amount should be avoided.

WO₃ has an ultraviolet absorbing effect and serves to prevent shorter wavelength ultraviolet discoloration of a glass. WO₃ is an optional component. Its content is preferably does not exceed 10 %, particularly 7 %. In order to obtain the above effect, it is desirably contained in the amount of at least 0.005 %. On the other hand, because of its tendency to absorb a visible light, WO₃ is liable to affect a luminance and a color tone of a lamp. Accordingly, its use in a large amount should be avoided.

ZrO₂ is a component which improves a weather resistance but increases a viscosity of a glass. ZrO₂ can be contained up to 9 %, preferably up to 6 %. A viscosity of a glass increases with a ZrO₂ content to allow more bubbles to remain in the glass. Also, more crystals are allowed to precipitate in the glass. This renders tube drawing processing difficult. However, a tubular glass useful for a fluorescent lamp can be fabricated in a stable fashion, if the ZrO₂ content does not exceed 9 %. If the ZrO₂ content does not exceed 6 %, the occurrence of crystal precipitation decreases to facilitate obtaining a glass with high dimensional accuracy. On the other hand, there is an occasion where ZrO₂ in a glass raw material or refractories is mixed in a glass in the amount of at least 0.001 %. In the present invention, if a total amount of ZrO₂, inclusive of the above amount, is at least 0.002 %, the above effect can be expected.

Ta₂O₅ has a effect that prevents shorter wavelength ultraviolet discoloration. Ta₂O₅ can be contained up to 10 %, preferably up to 6 %. If the Ta₂O₅ content does not exceed 10 %, the occurrence of crystal precipitation decreases to facilitate obtaining a glass with high dimensional accuracy. If the Ta₂O₅ content does not exceed 6 %, the tendency of crystal precipitation is further reduced to facilitate obtaining a glass with higher dimensional accuracy.

SnO₂ has a refining effect. Its content preferably does not exceed 5 %, particularly preferably 3 %. In order to obtain the above effect, it is desirable that the SnO₂ content is at least 0.0001 %. If the SnO₂ content does not exceed 5 %, crystal precipitation is not caused to occur in a glass. If the SnO₂ content does not exceed 3 %, more stable melting becomes possible.

Ce02 has the same effect as As₂O₃. However, CeO₂, if coexistent with TiO₂, tends to provide a glass with a yellow color. CeO₂ is preferably contained in the amount of not exceeding 3 %, particularly preferably not exceeding 0.2 %, further preferably not exceeding 0.05 %, optimally not exceeding 0.01 %. In order to obtain the above effect, it is desirable that the CeO₂ content is at least 0.0001 %. On the other hand, if the CeO₂ content does not exceed 3 %, crystal precipitation is not caused to occur in a glass, which is desirable. It is however desirable from a standpoint of color prevention that a use amount of CeO₂ should be limited to as small a value as possible.

A compound that generates SO₃ has the same effect as As₂O₃. However, inconveniently, SO₃ itself tends to cause bubbles. SO₃ is supplied into a glass from a glass raw material (a sulfate raw material, e.g., mirabilite (Na₂SO₄), and impurities). In addition, it is also brought in a glass composition when an SO₂ gas in a combustion atmosphere dissolves into a glass melt. In order to obtain the same effect as As₂O₃ has, a glass raw material is added such that an SO₃ content of glass is brought to at least 0.0001 %, particularly at least 0.0005 %. In order to avoid excessive bubble production, it is desirable that the glass raw material is prepared such that the SO₃ content of glass is adjusted not to exceed 0.2 %, particularly 0.1 %, further preferably 0.05 %, optimally 0.01 %. The amount of SO₃ introduced through a route other than the glass raw material can be reduced such as by reducing a partial pressure of SO₃ in a melting atmosphere, adjusting a melting temperature, using other refining agent or performing bubbling. It is also important that a fuel for use in melting a glass be suitably selected and controlled.

Fe₂O₃ has an effect that improves an ultraviolet absorption capacity of a glass by shifting an ultraviolet absorption edge toward a longer wavelength. An Fe₂O₃ content is preferably at least 0.0001 %, particularly preferably at least 0.001 %. It is also preferred that the Fe₂O₃ content does not exceed 0.05 %, particularly 0.02 %, further 0.01 %. If the Fe₂O₃ content is at least 0.0001 %, the above effect can be confirmed. If the Fe₂O₃ content does not exceed 0.05 %, marked coloration of a glass can be avoided. If the Fe₂O₃ content does not exceed 0.02 %, coloration is made difficult to occur even in a composition system with a higher TiO₂ content. If the Fe₂O₃ content does not exceed 0.01 %, coloration is made extremely difficult to occur. Since Fe₂O₃ is readily mixed in a glass as an impurity, its content including an impurity content must be controlled strictly.

An Fe²⁺ ion shows absorption in a broad range from a portion of a visible region to an infrared region, and itself is a cause of coloration. The Fe²⁺ ion can be utilized as an indication for control of coloration by an Fe³⁺ ion having a lower coordination number. That is, as a glass is brought to a higher oxidation state, more Fe³⁺ exists as Fe³⁺ having a higher coordination number that shows no absorption in the visible region. In this condition, strong light absorption occurs only in the ultraviolet region. No absorption occurs in the visible region. As a result, a colorless, transparent glass whose transmittance curve shows a sharp absorption edge in the ultraviolet region is obtained. On the other hand, Fe²⁺, if present in a large amount, not only causes coloration by itself, but also increases in amount of Fe³⁺ having a lower coordination number which exhibits a color. It is accordingly preferred that Fe²⁺ is contained in the amount of not exceeding 0.0050 %, particularly not exceeding 0.0030 %, further not exceeding 0.0010 %, all in terms of FeO. If the Fe²⁺ content does not exceed 0.0050 %, coloration by Fe²⁺ itself can be prevented. If the Fe²⁺ content does not exceed 0.0030 %, production of Fe³⁺ having a lower coordination number can be restrained. A tubular glass with a larger wall thickness shows stronger coloration (lowers a transmittance). However, even a thick-wall tubular glass is little colored if the Fe²⁺ content does not exceed 0.0010 %. When desired to suppress coloration by limiting the amount of TiO₂ and also shield a longer wavelength ultraviolet radiation by utilizing broad absorption of Fe²⁺ ions in the ultraviolet region, Fe₂O₃ may preferably be contained in the amount of at least 0.0003 %, more preferably at least 0.0008 %.

A ratio by amount of Fe²⁺ ions per all Fe can be utilized as an indication for control of an equilibrium condition of Ti ions. That is, if a glass is in a reduction state, the Fe²⁺ content as well as the Fe³⁺ content are high. In the present invention, Fe²⁺/all Fe of not exceeding 40 %, preferably not exceeding 20 %, constitutes a good condition for Ti ions. If Fe²⁺/all Fe does not exceed 40 %, coloration can be restrained. If Fe²⁺/all Fe does not exceed 20 %, a transparent glass can be obtained irrespective of the TiO₂ content.

Clearly from the forgoing, in order that a sufficiently colorless and transparent borosilicate glass is obtained, it is important to reduce the ratios of Fe²⁺ and Fe³⁺ having a lower coordination number and maximize the ratio of Fe³⁺ having a higher coordination number, per all Fe, by bringing a glass to an oxidation state within the limit of possibility.

A glass can be brought to an oxidation state such as by using an oxidizing agent, excluding an organic substance or metallic iron which may be mixed in a glass raw material, performing bubbling with oxygen, or controlling a partial pressure of oxygen in a melting atmosphere. For example, As₂O₃ and Sb₂O₃, which are added as essential components in the present invention, have such an effect.

Cl₂ is effective as a refining agent. Its amount is preferably at least 0.001 %, as expressed by a residual Cl₂ content of a glass. Its upper limit may preferably be 0.5 %. If the amount of Cl₂ falls below 0.001 %, a refining effect can not be expected, resulting in the tendency to increase bubbles. From the viewpoint of maintaining a working atmosphere, the amount of Cl₂ preferably does not exceed 0.5 %.

A fluorescent lamp envelope of the present invention is now explained.

First, a raw material is prepared such that it results in a glass having the above-described characteristics, and then melted. The resulting glass melt is formed into a tubular form by a tube drawing method such as a Danner method, down-draw method or up-draw method. Subsequently, the tubular glass is cut into a predetermined size and optionally postprocessed to provide an envelope.

If the tube drawing forming is followed by quenching, coloration of a glass can be reduced. Although a glass while in a molten state is colorless and transparent, it tends to be colored if slowly cooled in the temperature range from about 800 °C to about 500 °C. The following is believed to explain why quenching reduces coloration. This phenomenon is believed to occur due to a change of a distance between an anion (Fe, Ti) and a ligand (O) that depends on a cooling rate. Since ions constituting a glass can move freely in the glass while in a molten state, the molten glass has a large interionic spacing. The interionic spacing decreases with cooling and becomes influential to linkage and configuration of the ions. At the lower cooling rate, the interionic spacing decreases so that the ions become more influential to each other. At the higher cooling rate, a glass is solidified in a condition closer to the molten glass. This increases the interionic spacing so that the ions become less influential to each other. If the interionic spacing is narrowed, Ti ions provide an influence on a coordination state of Fe³⁺ ions to bring them into a coordination state as if approximated to that with a lower coordination number. This is believed to result in coloration of the glass.

The cooling rate needs to be higher than those used in the production of convention glasses. Quenching is generally achieved by blowing a large quantity of air. However, water may be sprayed onto the glass during a tube drawing process. As a result of quenching, the resulting glass is reduced in density. As a standard for a degree of quenching, a density of the glass subsequent to annealing is preferably reduced to 98.2 % - 99.6 %, particularly 98.6 - 99.4 %, further 98.6 - 99.2 %, of that of the glass prior to annealing. The above effect is obtained if the glass is cooled such that a density of the glass subsequent to annealing is preferably reduced to 99.6 % or less, more preferably 99.4 % or less, of that of the glass prior to annealing. By quenching, a surface compressive stress is produced to increase a tendency of the tubular glass to increase its strength. This strength does not increase excessively, if a density of the glass subsequent to annealing is 98.2 % or more of that of the glass prior to annealing. In such a case, cutting is not made difficult to perform. If about 98.6 % or more, even a thick-wall tube can be cut in a steady fashion. In the case where coloration likely occurs due to the high TiO₂ content, it is desirable that the glass is cooled such that a density of the glass subsequent to annealing is reduced to 99.2 % or less of that of the glass prior to annealing.

The fluorescent lamp envelope of the present invention, as obtained in the manner as described above, is colorless, transparent and capable of effectively shielding an ultraviolet radiation in the region that does not exceed 313 nm. It also has a superior resistance to shorter wavelength ultraviolet discoloration. Further, it exhibits a coefficient of thermal expansion of 36 - 54 x 10⁻⁷/°C.

This envelope for a fluorescent lamp can be used in the fabrication of a fluorescent lamp for a backlight of a liquid crystal display element, for example.

### EXAMPLES

The present invention is below explained with reference to examples. Figures show data for Examples (Samples No.1 - No.8) in accordance with the present invention.

**[TABLE 1]**

| | 1 | 2 | 3 | 4 | 5 | 6 | 7 | 8 |
|---|---|---|---|---|---|---|---|---|
| SiO₂ | 62.2 | 85.8 | 60.6 | 63.4 | 65.1 | 87.4 | 68.7 | 66.1 |
| B₂O₃ | 19.5 | 15.8 | 18.5 | 18.9 | 14.3 | 15.9 | 14.5 | 16.1 |
| Al₂O₃ | 2.1 | 3.2 | 1.1 | 3.4 | 5.1 | 4 | 3.8 | 4.2 |
| Li₂O | 0.9 | 0 | 0.5 | 1.0 | 1.0 | 0.5 | 0.2 | 0.2 |
| Na₂O | 1.1 | 2.5 | 3.1 | 0.4 | 0.2 | 1.2 | 1.1 | 1.1 |
| K₂O | 6.9 | 6.2 | 4.6 | 7.75 | 3.5 | 4.1 | 4 | 4.1 |
| MgO | 0 | 0 | 0.6 | 0 | 0.4 | 0.4 | 0.6 | 0.7 |
| CaO | 0 | 0 | 0.5 | 0 | 1.1 | 0.6 | 0.9 | 0.8 |
| SrO | 0 | 0 | 2 | 0 | 0 | 0 | 0 | 0 |
| BaO | 1.0 | 0 | 1.2 | 0 | 2 | 1.5 | 1.3 | 1.3 |
| ZnO | 0.5 | 0.2 | 2 | 0.5 | 0.2 | 0.2 | 0.2 | 0.4 |
| TiO₂ | 5.5 | 3.8 | 4.3 | 4.1 | 4 | 3.9 | 4.3 | 4.7 |
| AS₂O₃ | 0.0008 | 0.08 | 0.0162 | 0.0018 | 0.0025 | 0.0004 | 0.0014 | 0.0004 |
| Sb₂O₃ | 0.1 | 0.08 | 0.9 | 0.5 | 0.4 | 0.3 | 0.3 | 0.2 |
| Nb₂O₅ | 0 | 0.9 | 0 | 0 | 20 | 0.0 | 0 | 0 |
| WO₃ | 0 | 1.1 | 0 | 0 | 0 | 0 | 0 | 0 |
| ZrO₂ | 0.111 | 0.152 | 0.049 | 0.005 | 0.023 | 0.006 | 0.056 | 0.008 |
| SnO₂ | 0.011 | 0.122 | 0.086 | 0.001 | 0.069 | 0.0005 | 0.072 | 0.099 |
| CeO₂ | 0.0086 | 0.002 | 0.0034 | 0.0005 | 0.0009 | 0.0008 | 0.009 | 0.0053 |
| SO₃ | 0.0081 | 0.0038 | 0.0015 | 0.0005 | 0.0023 | 0.0009 | 0.0012 | 0.0082 |
| Fe₂O₃ | 0.0148 | 0.0010 | 0.0049 | 0.0089 | 0.0060 | 0.0035 | 0.0090 | 0.0092 |
| Cl₂ | 0.001 | 0.012 | 0.039 | 0.111 | 0.096 | 0.049 | 0.0039 | 0.001 |
| Li₂O+NA₂O+K₂O | 8.9 | 8.7 | 8.2 | 9.15 | 4.7 | 5.8 | 5.3 | 5.4 |
| TiO₂/SiO₂ (mol) | 0.068 | 0.043 | 0.053 | 0.049 | 0.048 | 0.043 | 0.047 | 0.053 |
| TiO₂/B₂O₃ (mol) | 0.25 | 0.21 | 0.20 | 0.19 | 0.24 | 021 | 0.26 | 0.25 |
| Fe²⁺ content (in terms of FeO) | 0.0012 | <0.0002 | 0.0001 | <0.0002 | 0.001 | 0.0003 | <0.0002 | 0.0009 |
| Fe²⁺/Total Fe(%) | 8.8 | - | 22 | - | 17.7 | 9.1 | - | 10.4 |
| Density (°C) | 2.36 | 2.34 | 2.39 | 2.32 | 2.33 | 2.33 | 2.33 | 2.33 |
| Strain point (°C) | 468 | 477 | 487 | 462 | 496 | 495 | 503 | 491 |
| Temperature corresponding to 10⁴dPa·S(°C) | 991 | 1084 | 1018 | 1011 | 1137 | 1155 | 1158 | 1125 |
| Thermal expansion coefficient | 53.1 | 52.8 | 52.0 | 52.5 | 39.9 | 38.5 | 38.0 | 40.1 |
| Ultraviolet shielding capacity | O | O | O | O | O | O | O | O |
| Resistance to shorter wavelength ultraviolet discoloration | O | O | O | O | O | O | O | O |
| Bubbles | O | O | O | O | O | O | O | O |
| Weather resistance | O | O | O | O | O | O | O | O |

Each sample was prepared as follows.

First, a glass raw material was prepared having the composition specified in the Table and melted in a platinum pot at 1,550 °C for 8 hours. The glass melt was then formed into a predetermined shape and then processed for evaluation.

The glass raw material was prepared using pegmatite powder, alumina, boric acid, lithium carbonate, sodium carbonate, potassium carbonate, potassium nitrate, magnesium oxide, calcium carbonate, strontium carbonate, barium carbonate, zinc oxide, titanium oxide, arsenic trioxide, antimony oxide, niobium pentoxide, tungsten oxide, zircon, tin oxide, cerium oxide, sodium sulfate and common salt. However, the type of the raw material is not limited thereto and can be suitably chosen depending upon the oxidation-reduction state, water content and others of the glass. Also, each content shown to represent the composition is expressed in a converted value and is not limited to a valence number of the oxide specified in Table.

As can be clearly seen from Table 1, the samples No. 1 - No.8, which are examples of the present invention, are glasses superior not only in ultraviolet shielding capacity but also in shorter wavelength ultraviolet discoloration resistance.

The content of Cl₂ was determined by fluorescent X-ray analysis. After each glass was treated with an acid, the respective contents of SO₃, Sb₂O₃, As₂O₃ and CeO₂ were determined by ICP-MS and the content of Fe₂O₃ was determined by fluorescent X-ray analysis. The Fe²⁺ content was determined according to ASTM C169-92.

Density was measured by an Archimedes' method.

Strain point was determined according to ASTM C336.

Temperature corresponding to 10⁴ dPa·S was determined by a platinum ball pulling method.

Thermal expansion coefficient was determined by a thermal expansion measuring device.

Each glass was mirror polished at both surfaces to prepare a 0.3 mm thick, plate glass sample which was then measured for spectral transmittance at a wavelength of 313 nm to evaluate its ultraviolet shielding capacity. In this evaluation, the sample showing the spectral transmittance of not exceeding 15 % was rated as "O". The 313 nm wavelength is a spectral line emitted from mercury.

Resistance to shorter wavelength ultraviolet discoloration was evaluated from a difference in transmittance in the visible region of each sample prior to and subsequent to exposure to a shorter wavelength ultraviolet radiation. First, a 1 mm thick plate glass was mirror polished at its both surfaces to prepare a sample. Subsequently, a wavelength of a light was measured at which the sample, prior to exposure to a shorter ultraviolet radiation, exhibited a transmittance of 80 %. The sample was then irradiated (irradiation distance 25 mm) for 60 minutes with a shorter wavelength ultraviolet radiation having a main wavelength of 253.7 nm (other wavelengths including 185 nm, 313 nm and 365 nm) from a 40 W low-pressure mercury lamp. Thereafter, the sample was again measured for transmittance at the wavelength at which it prior to exposure exhibited a transmittance of 80 %. If the reduction in transmittance of the sample subsequent to exposure to the shorter wavelength ultraviolet radiation was 0.3 % or less (measurement error considered), the sample was rated as "O".

A block-shaped sample, weighing 100 g, was observed with a microscope at 40X magnification to count the number of bubbles (having diameters of at least about 50 µm). If the number of bubbles counted was 2 or less, per 100 g, the sample was rated as "O".

For evaluation of weather resistance, each glass sample was mirror polished and then placed in an unsaturated pressure cooker test (PCT) machine at 121 °C at 2 atmospheric pressure. After 24 hours, the sample was removed and its surface condition was observed with a microscope at 100X magnification. For a comparative purpose, a backlight glass BFK, manufactured by Nippon Electric Glass Co., Ltd., was evaluated in the same manner as described above. As a result of observation, the sample was rated as "⊚" if it showed a marked improvement in surface condition over BFK and as "O" if it was comparable in surface condition to BFK.

Next, a glass raw material was prepared in the same manner as above, melted in a melting furnace, formed by a Danner tube drawing process and then quenched by a water spraying method. Thereafter, the resultant was cut into a 2.6 Ø x 500 mm envelope sample having a wall thickness of 0.3 mm.

The obtained envelope sample was evaluated for degrees of quenching, coloration and phase separation. The results are shown in Table 2.

**[TABLE 2]**

| | 1 | 2 | 3 | 4 | 5 | 6 | 7 | 8 |
|---|---|---|---|---|---|---|---|---|
| Degree of quenching | 99.1 | 98.92 | 98.99 | 98.92 | 98.81 | 99.32 | 99.28 | 98.98 |
| Degree of coloration | ○ | ⊚ | ⊚ | ⊚ | ⊚ | ⊚ | ⊚ | ⊚ |
| Degree of phase separation | Δ | ⊚ | ○ | ⊚ | ⊚ | ⊚ | ○ | Δ |

A degree of quenching was evaluated as follows. First, a density of the envelope sample immediately after fabrication was measured by an Archimedes' method. The sample was then maintained at a temperature of (strain point + 80 °C) for 60 minutes and thereafter cooled at 1 °C /min to a temperature of (strain point - 200 °C). A density of the glass tube thus annealed was also measured in the same manner as above. The degree of cooling was then determined using the following equation.

### Degree of cooling = Density of tube prior to annealing/Density of tube subsequent to annealing

A degree of coloration was evaluated as follows. First, a tubular glass sample (500 mm long) while penetrating a black paper was suspended vertically. Thereafter, the tubular glass was irradiated from its bottom end with a homogeneous white light having no directivity to observe a color tone of the sample at its top end. A backlight glass BFK, manufactured by Nippon Electric Glass Co., Ltd. and having the same length as the above tubular glass, was evaluated in the same manner as described above. As a result of comparison thereof, the sample was rated as "⊚" if its color tone was clearly more pale than BFK and as "O" if it was comparable in color tone to BFK.

Degree of phase separation was evaluated as follows. A 100 mm long, tubular glass was heated for 10 minutes at a firing temperature of a phosphor, 700 °C, and then observed in the same manner as in the evaluation of coloration degree. As a result, the glass was rated as "⊚" if its brightness remained unchanged after the firing, as "○" if its brightness somewhat decreased after the firing, as "Δ" if it was clearly darkened and as "×" if a cloud was produced in the wall thickness direction of the tubular glass.

## Claims

1. A lighting glass **characterized** as containing, by mass,
50 - 78 % SiO₂,
11 - 25 % B₂O₃,
0 - 10 % Al₂O₃,
3 - 20 % Li₂O + Na₂O + K₂O,
0 - 10 % MgO,
0 - 10 % CaO,
0 - 20 % SrO,
0 - 20 % BaO,
0 - 15 % ZnO,
2.6 - 9 % TiO₂ and
0.001 - 5 % As₂O₃ + Sb₂O₃.

2. The lighting glass of claim 1, **characterized in that** the content of TiO₂ is 3.5 - 9 % and the content of As₂O₃ + Sb₂O₃ is 0.01 - 5 %.

3. The lighting glass of claim 1, **characterized in that** a molar ratio TiO₂/SiO₂ is 0.03 - 0.08.

4. The lighting glass of claim 1, **characterized in that** it further contains Fe₂O₃ in the amount of 0.0001 - 0.05 %.

5. The lighting glass of claim 4, **characterized in that** Fe²⁺ is contained in the amount of not exceeding 0.0030 %, in terms of FeO.

6. An envelope for a fluorescent lamp **characterized** as comprising the lighting glass of any one of claims 1 - 5.
